# EUROPÄISCHE PATENTSCHRIFT

(11) **EP 1 354 729 B1**
(45) Veröffentlichungstag und Bekanntmachung des Hinweises auf die Patenterteilung: **26.07.2006**
(21) Anmeldenummer: 03007636.8
(22) Anmeldetag: 03.04.2003
(51) Int. Cl.: B60C 23/04

(54) **Einrichtung zur Überwachung und Identifizierung von Luftreifen**
Device for monitoring and identification of tires
Dispositif pour la surveillance et l'identification de pneumatiques

(30) Priorität: 18.04.2002 DE 10217215
(43) Veröffentlichungstag der Anmeldung: 22.10.2003
(73) Patentinhaber: Continental Aktiengesellschaft, 30165 Hannover (DE)
(72) Erfinder: Strache, Wolfgang, Dr., 30165 Hannover (DE); Behrends, Holger, 30175 Hannover (DE); Recker, Carla, Dr., 30167 Hannover (DE); Scheuermann, Frank, 45739 Oer-Erkenschwick (DE); Schulze, Siegfried, 47495 Rheinberg (DE); Jenke, Roland, 29693 Hademsdorf (DE); Fidan, Sadettin, 30827 Garbsen (DE); Lehmann, Jörg, Dr., 30451 Hannover (DE); Arendt, Carsten, 30419 Hannover (DE)

(56) Entgegenhaltungen:
- EP-A- 0 657 836
- EP-A- 0 832 765
- WO-A-99/29495
- WO-A-99/29522

## Beschreibung

Die Erfindung betrifft eine Einrichtung zur Überwachung und Identifizierung von Luftreifen, wobei der zu überwachende Luftreifen ein oder mehrere elektronische Bauteile zum Senden und / oder Empfangen und Speichern von Informationen und / oder Energie aufweist, wobei außerhalb des zu überwachenden Luftreifens eine in der Nähe desselben angeordnete Sende- und Empfangseinrichtung vorhanden und der Luftreifen relativ zur außerhalb desselben angeordneten Sende- und Empfangseinrichtung bewegbar und /oder drehbar ist.

Solche Einrichtungen sind in der Regel in Form von Transpondern ausgebildet und bestehen aus einem oder mehreren Elektronikbauteilen (Chip, ggf. mit integrierten Sensorelementen) sowie aus an das Elektronikbauteil angeschlossenen Antennen. Mit dem Begriff Antenne sind in diesem Fall sowohl elektromagnetische Energiewandler, die Antenne im hermömmlichen Sinne, als auch magnetische sowie elektronische Koppelglieder gemeint. An den Transponder können z.B. Sensoren für Verformungen, Druck oder Temperatur angeschlossen sein, die die entsprechneden Zustandsgrößen im Reifen messen und wonach die Meßsignale dann über den Transponder ausgelesen werden können.

Die DE 41 12 738 offenbart hierzu eine Vorrichtung zur Steuerung eines Kraftfahrzeugsystems mit einem in einen Kraftfahrzeugreifen eingebauten Datenträger, der Daten enthält, die die Eigenschaften eines Kraftfahrzeugreifens spezifizieren und die über eine außerhalb und in der Nähe des Kraftfahrzeugreifens angeordnete Empfangseinrichtung ausgelesen werden können. Da die Reichweite solcher Datenträger, beispielsweise ausgebildet als passiver Transponder ohne eigene Stromversorgung, mit ca. acht bis zwanzig Zentimetern nur relativ gering ist, besteht bei dieser Vorrichtung der Nachteil, dass bei Drehung des Reifens der Datenträger nur dann ausgelesen werden kann, wenn er sich im Bereich der Empfangseinrichtung befindet, also lediglich in einer oberen Position und nicht beim Durchlaufen der Aufstandsfläche oder bei Lenkbewegungen. Bei mit Sensoren versehenen Trahspondern, gerade bei solchen, die mit Verformungssensoren zur Messung der Reifenverformung ausgerüstet sind, erhält man aber die wichtigsten Signale beim Durchlaufen der Bodenaufstandsfläche. Ferner muß bei Reifendruck-Kontrollsystemen der Sensor in jeder Drehposition des Reifens gelesen werden können, damit der Reifendruck auch bei einem stehenden Fahrzeug gemessen werden kann.

Die EP 0 657 836, WO 99/29552 A1, WO 99/29495 A1 und WO01/36221 A1 offenbaren weitere Reifen mit unterschiedlichen Sende- und Empfangssystemen.

Der Erfindung liegt die Aufgabe zu Grunde, eine Einrichtung zur Überwachung und Identifizierung von Luftreifen für Fahrzeuge bereitzustellen, bei der Informationen und /oder Energie zwischen einem im oder am Reifen befindlichen elektronischen Bauteil und einer außenliegenden Sende- und Empfangseinheit übertragen werden können, die einfach im Reifen integriert werden kann und eine große Übertragungsreichweite zwischen elektronischen Bauteil sowie Sende- und Empfangseinrichtung ermöglicht.

Gelöst wird die Aufgabe gemäß den kennzeichnenden Merkmale des Anspruchs 1.

Ein Vorteil ist insbesondere darin zu sehen, dass auf diese Weise die Übertragungsreichweite zwischen dem elektronischen Bauteil und der außenliegenden Sende- und Empfangseinrichtung erheblich gesteigert wird. Die Leiterschleife der sekundären Antenne umschließt einen größeren Bereich des Reifens als dies bei herkömmlichen Transpondersystemen der Fall ist, die ausschließlich eine Primärantenne besitzen und deswegen nur über eine geringe Übertragungsreichweite verfügen. Ferner ist die Übertragung durch die Anordnung der sekundären Antenne beeinflußbar, die als Leiterschleife beliebig der Kontur des Luftreifens angepasst und so ausgelegt werden kann, dass die Übertragungsstrecke zur außenliegenden Sende- und Empfangseinheit gering ist und dadurch die Übertragungsqualität verbessert wird. Ein weiterer Vorteil besteht darin, dass solche Transpondersysteme mit einer lokalen Begrenzung der sekundären Antenne sich einfach, beispielsweise mit Hilfe eines Gummiflickens, im Reifen anordnen. Auf diese Weise kann jeder beliebige Reifen mit diesem Transpondersystem nachgerüstet werden.

In einer weiteren vorteilhaften Weiterbildung der Erfindung ist vorgesehen, dass die sekundäre Antenne einen Umfangsbereich des Luftreifens in einer Fläche parallel zur begrenzenden Oberfläche des Luftreifens im Wesentlichen umschließt. Hierdurch wird die gesamte Ausdehnung des Reifenkörpers für die Antennengestaltung nutzbar und die Wirkfläche der Antenne maximiert, die sich aus dem durch die Leiterschleife umschlossenen Bereich im Reifen ergibt.

In einer weiteren vorteilhaften Weiterbildung der Erfindung ist vorgesehen, dass die sekundäre Antenne innerhalb des Luftreifens oder auf der Innen- oder Außenoberfläche des Luftreifens ausgebildet ist. Auf diese Weise läßt sich das Transpondersystem einfach in den Reifen integrieren. Es ist dadurch ebenfalls möglich den Reifen erst nach der Reifenkonfektion mit diesem Transpondersystem auszurüsten.

In einer weiteren vorteilhaften Weiterbildung der Erfindung ist vorgesehen, dass das elektronische Bauteil als ein mit Sensoren versehener Transponder und die primäre Antenne als eine das elektronische Bauteil im Wesentlichen in seiner Ausbreitungsebene umschließende Leiterschleife ausgebildet sind. Auf eine solche Weise läßt sich die induktive Kopplung zwischen Primärantenne und Sekundärantenne innerhalb von relativ dünnwandigen Strukturen - wie dies bei einem Reifen der Fall ist - besonders effektiv und einfach erreichen.

In einer weiteren vorteilhaften Weiterbildung der Erfindung ist vorgesehen, dass ein Teil der Leiterschleife der sekundären Antenne in einem Koppelbereich im Wesentlichen in der Ebene der primären Antenne letztere teilweise, ganz oder mehmals umschließt. Dadurch wird die Integration des Transpondersystems während der Reifenkonfektion erleichtert. Der Koppelbereich der sekundären Antenne kann in mehreren Windungen um die primäre Antenne geführt und auf diese Weise einfach fixiert werden. Ferner wird dadurch vor allem eine transformatorische Wirkung erzielt.

In einer weiteren vorteilhaften Weiterbildung der Erfindung ist vorgesehen, dass die Leiterschleife der sekundären Antenne im Wesentlichen in einer Fläche innerhalb oder parallel zum Laufstreifen den Umfang des Luftreifens umschließt. Bei einer solchen Ausbildung kann die außerhalb und fahrzeugseitig angeordnete Sende- und Empfangseinrichtung im Grunde beliebig innerhalb des Radhauses dort angeordnet werden, wo andere Fahrzeugeinrichtungen möglichst wenig gestört werden, beispielsweise parallel zur Reifenlauffläche hinter den der Fahrzeugmitte zugewandten Seiten der Kunststoffauskleidung von Radhäusern.

In einer weiteren vorteilhaften Weiterbildung der Erfindung ist vorgesehen, dass die sekundäre Antenne innerhalb des Laufstreifens oder Gürtelbereiches oder der Seitenwand angeordnet und der Transponder mit der primären Antenne auf der Innenseite des Luftreifens aufgebracht ist. Hierdurch ergeben sich deutliche Vorteile bei der Herstellung solcher Reifen, indem nämlich das Einbringen der sekundären Antenne in den normalen Reifenaufbauprozess an einer Aufbautrommel integriert werden kann, während der Transponder mit der primären Antenne erst nach der Bombierung des Reifens und damit nach Fixierung der endgültigen Lage der sekundären Antenne aufgebracht wird. Auch hier befinden sich am Ende der Fertigung, d.h. nach dem Vulkanisieren die Kopplungsbereiche der Leiterschleifen der beiden Antennen im Wesentlichen in einer Ebene. Dies ist in diesem Fall so zu verstehen, dass die Leiterschleife der primären Antenne bzw. die durch letztere aufgespannte Ebene sich in geringem axialen Abstand -bezogen auf die magnetische Achse der Leiterschleife der primären Achse- zu der durch den Kopplungsbereich der sekundären Antenne aufgespannten Ebene befinden kann. Der radiale Abstand überschreitet nicht die Materialdicke des Reifens im jeweiligen Kopplungsbereich und somit kann in Hinblick auf die induktive Kopplung in ausreichender Näherung von "einer Ebene" gesprochen werden. Der Transponder kann bei einer solchen Ausführung erst nach dem Vulkanisieren an der entsprechenden Stelle auf die Innenseite des Reifenkörpers aufgeklebt bzw. mit dieser durch Kaltvulkanisation verbunden werden.

In einer weiteren vorteilhaften Weiterbildung der Erfindung ist vorgesehen, dass der Transponder und die primäre Antenne in axialer Richtung des Reifens asymetrisch angeordnet sind. Eine solche asymmetrische Positionierung kann sich beim Aufbringen des Transponders während der Reifenkonfektionierung als vorteilhaft erweisen.

In einer weiteren vorteilhaften Weiterbildung der Erfindung ist vorgesehen, dass die sekundäre Antenne als geschlossener Ring in einer Fläche parallel zum Laufstreifen um den Reifen verläuft. Eine solche Anordnung der sekundären Antenne im Reifen ergibt die größtmögliche Übertragungsreichweite des Transpondersystems in axialer Richtung des Luftreifens.

In einer weiteren vorteilhaften Weiterbildung der Erfindung ist vorgesehen, dass der Transponder, die primäre Antenne sowie der Koppelbereich der sekundären Antenne in einem Gehäuse angeordnet sind, wobei der Koppelbereich über eine oder mehrere Steckverbindungen mit dem restlichen Teil der sekundären Antenne verbunden wird. Die separate Anordnung einzelner Teile in einem Gehäuse vereinfacht die Herstellung sowie die Integration des Transpondersystems in den Luftreifen.

In einer weiteren vorteilhaften Weiterbildung der Erfindung ist vorgesehen, dass die sekundäre Antenne aus einem Draht besteht, welcher in mehreren Windungen zu einem geschlossenen Ring geformt wird. Bei der herkömmlichen Herstellung von Leiterschleifen wird ein Draht beispielsweise über eine Schweißverbindung zu einem geschlossenen Ring verbunden. Dadurch dass die Leiterschleife aus mehreren Drahtwindungen besteht, die in einem engen Kontakt zueinander stehen, kann auf eine Verbindung der Drahtenden verzichtet werden.

In einer weiteren vorteilhaften Weiterbildung der Erfindung ist vorgesehen, dass die Leiterschleife der sekundären Antenne aus mehreren Strängen besteht. Auf diese Weise ergibt sich eine flexible Leiterschleife, die eine insgesamt höhere Festigkeit besitzt und die Deformationen des Reifens im Betriebszustand ausgleichen kann. Ferner wird durch eine solche Ausführung der Widerstand in der Leiterschleife erhöht und dadurch die Übertragungsreichweite gesteigert.

In einer weiteren vorteilhaften Weiterbildung der Erfindung ist vorgesehen, dass die Leiterschleife der sekundären Antenne in Ihrer Ausbreitungsrichtung eine hohe Dehnbarkeit besitzt. Bei der Reifenkonfektion und im Reifenbetriebszustand ist der Reifen erheblichen Deformationen ausgesetzt. Durch die flexible Ausführung der Leiterschleife kann dieser die Verformungen aufnehmen und bestitzt dadurch eine besonders hohe Dauerfestigkeit. Eine hohe Felexibilität der Leiterschleife läßt sich außer durch eine geeignete Materialauswahl dadurch erreichen, dass sie eine geschlängelte oder zickzackförmige Gestalt besitzt.

Anhand von Ausführungsbeispielen soll die Erfindung näher erläutert werden. Es zeigen:
- Fig. 1: eine Einrichtung zur Überwachung und Identifizierung von Luftreifen, ausgebildet als Transponder mit einer als Leiterschleife ausgebildeten primären Antenne und mit einer die primäre Antenne im Wesentlichen in ihrer aufgespannten Ebene in einem Koppelbereich umschließenden angekoppelten sekundären Antenne in ebener Projektion, d.h. in "abgerollter" Darstellung,
- Fig. 2: eine weitere Ausführung einer Einrichtung zur Überwachung und Identifizierung von Luftreifen für Fahrzeuge gemäß Fig. 1,
- Fig. 3: einen teilweise geschnittenen Reifen mit einer Einrichtung zur Überwachung und Identifizierung von Luftreifen für Fahrzeuge gemäß Fig.1,
- Fig. 4: unterschiedliche Positionen für Leiterschleifen der sekundären Antenne in einem Reifenquerschnitt,
- Fig. 5: ein weiteres Ausführungsbeispiel mit einer asymmetrisch angeordneten Transponderschlaufe,
- Fig. 6: drei Ausführungsbeispiele mit einer lokal begrenzten sekundären Antenne,
- Fig. 7: ein Ausführungsbeispiel mit einer sekundären Antenne, die als geschlossener Ring um den Reifen verläuft,
- Fig. 8: ein Gehäuse mit einem integriertem Koppelbereich der sekundären Antenne und
- Fig. 9: ein Ausführungsbeispiel der sekundären Antenne.

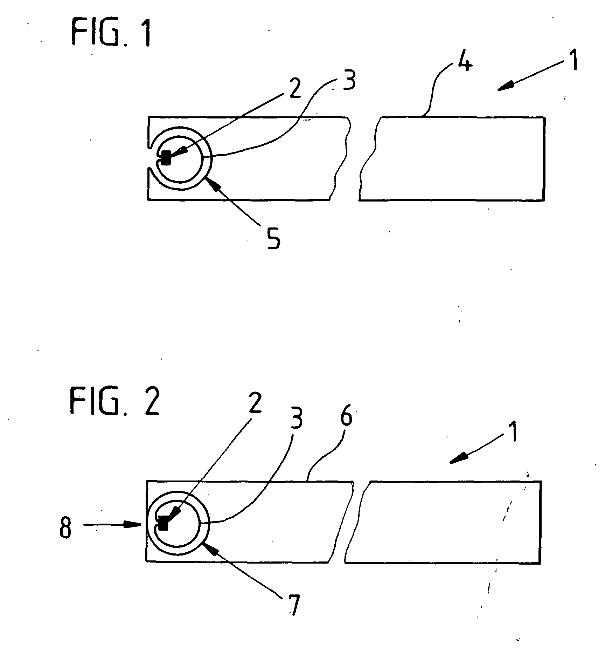

Die in der Fig. 1 dargestellten Einrichtung zur Überwachung und Identifizierung von Luftreifen 1 zeigt einen Transponder 2 mit einer als Leiterschleife ausgebildeten primären Antenne 3. In der durch die primäre Antenne 3 aufgespannten Ebene liegt im Wesentlichen auch der Teil der als Leiterschleife ausgebildeten sekundären Antenne 4, der im Koppelbereich 5 die induktive Kopplung zwischen der primären Antenne 3 und der sekundären Antenne 4 sicherstellt. Bei dieser Figur handelt es sich um eine abgerollte Darstellung der sekundären Antenne 4 ohne einen Luftreifen. Die sekundäre Antenne 4 verläuft im Reifen im Wesentlichen in einer Ebene innerhalb oder parallel zur Kontur bzw. Oberfläche des Reifens.

Fig. 2 zeigt eine weitere Ausführung einer Einrichtung zur Überwachung und Identifizierung von Luftreifen 1 für Fahrzeuge, ebenfalls ausgebildet als Transponder 2 mit einer als Leiterschleife ausgebildeten primären Antenne 3 und mit einer die primäre Antenne 3 im Wesentlichen in ihrer aufgespannten Ebene im Koppelbereich 7 umschließenden angekoppelten sekundären Antenne 6. Im Überkreuzungsbereich 8 ist dabei die Leiterschleife der sekundären Antenne 6 so ausgebildet, dass sich die Leiter nicht berühren, sondern lediglich in geringem Abstand und isoliert voneinander überkreuzen. Es ist ebenfalls möglich, dass die Leiterschleife der sekundären Antenne 4 im Koppelbereich 7 mehrmals um die primäre Antenne 3 gewickelt ist.

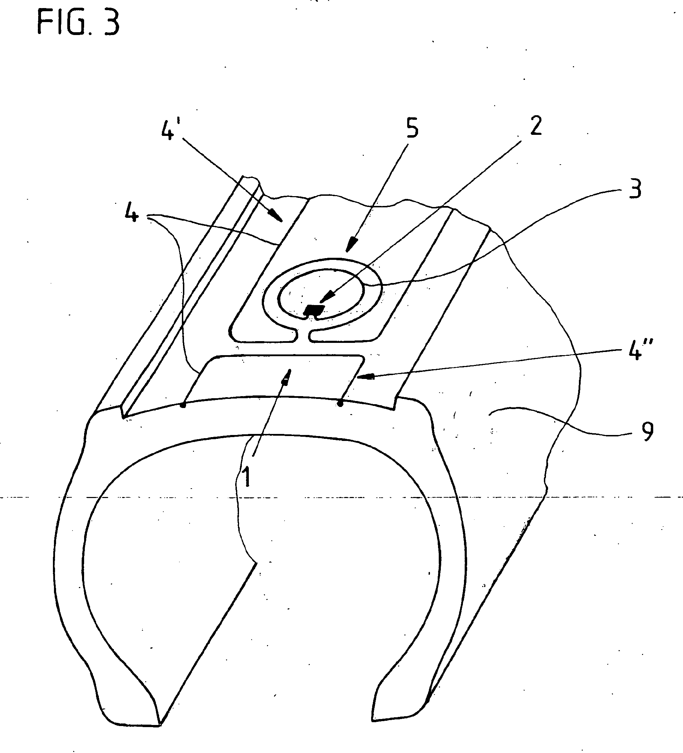

Fig. 3 zeigt einen teilweise geschnittenen Reifen 9 mit einer "eingebauten" Einrichtung zur Überwachung und Identifizierung von Luftreifen 1 für Fahrzeuge gemäß Fig.1. Die Figur zeigt ebenfalls den Transponder 2 mit seiner primären Antenne 3. Im Koppelbereich 5 liegt der die induktive Kopplung zwischen der primären Antenne 3 und der sekundären Antenne 4 sicherstellende Leiterschleifenbereich der sekundären Antenne 4 im Wesentlichen in der nach Einbau in den Zenitbereich eines Reifens ggf. leicht räumlich gekrümmt verlaufenden Ebene, die durch die primäre Antenne 3 aufgespannt bzw. definiert ist. Die als Leiterschleife ausgebildete sekundäre Antenne 4 verläuft im Wesentlichen als in sich geschlossener Ring mit mehreren Krümmungen um den Reifen. Die sekundäre Antenne 4 umspannt auf diese Weise den Reifen 9 über seinen gesamten Umfang. Die Anfangs- und Endbereiche 4' und 4" der sekundäre Antenne 4 liegen sich bei diesem Ausführungsbeispiel im Reifen gegenüber. Bei einer solchen Ausbildung wird eine sichere Übertragung von Informationen und / oder Energie bereits dann erreicht, wenn die außerhalb des Reifens und fahrzeugseitig angeordnete Sende- und Empfangseinrichtung in einfachster Weise parallel zur Reifenlauffläche hinter den der Fahrzeugmitte zugewandten Seiten der Kunststoffauskleidung des Radhauses angebracht ist. Der Transponder wird vorzusgweise bei einer Frequenz von 125 KHz oder 13,56 MHz betrieben.

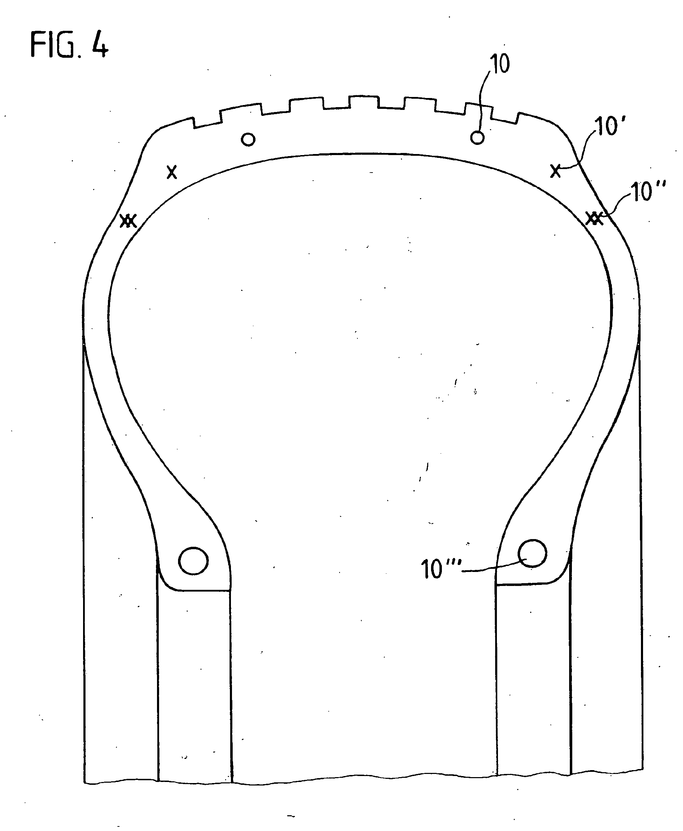

Fig. 4 zeigt beispielhaft besonders bevorzugte unterschiedliche Positionen 10 bis 10'" für Leiterschleifen einer induktiv angekoppelten sekundären Antenne im Querschnitt eines Reifens. Die beiden parallel verlaufenden Drähte der Leiterschlaufe sind im Wesentlichen symmetrisch zur axialen Mitte des Reifens angeordnet.

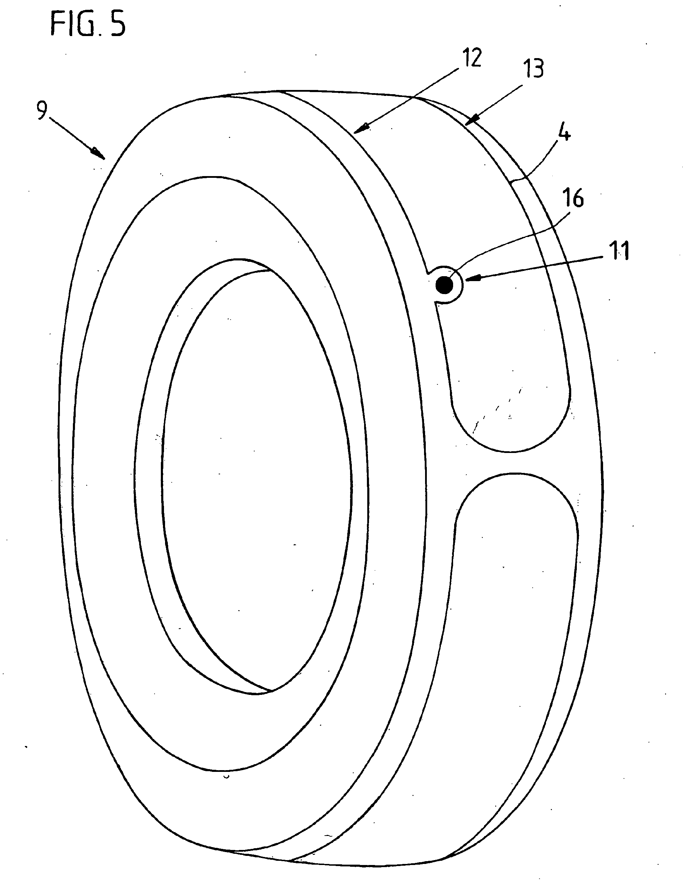

Fig. 5 zeigt ein weiteres Ausführungsbeispiel, bei dem die Transponderschlaufe 11 auf die Lauffläche bezogen asymmetrisch angeordnet ist. Die Transponderschlaufe 11 befindet sich in einem der beiden parallelen Stränge 12 oder 13 der sekundären Antenne 4. Der Transponder und die zugehörige primäre Antenne sind vereinfacht als Kreis 16 dargestellt.

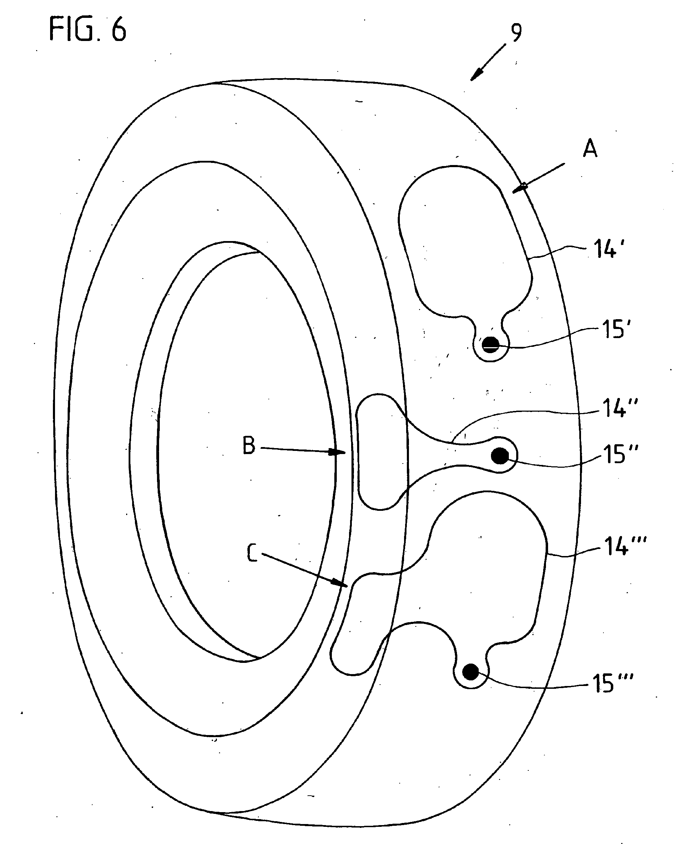

Fig. 6 zeigt drei weitere Ausführungsbeispiele, bei denen sich die sekundären Antennen 14' bis 14'" jeweils über Teilbereiche des Reifens erstrecken. Die Transponder und die jeweilige primäre Antenne sind vereinfacht als Kreis 15', 15" und 15'" dargestellt. Bei der Variante A erstreckt sich die sekundäre Antenne ausschließlich über einen Bereich einer Ebene, die im Wesentlichen parallel zum Laufstreifen des Reifens liegt. Bei dieser Variante müsste die Sende- und Empfangseinrichtung parallel zum Laufstreifen des Reifens angeordnet werden. Bei der Variante B wird ein Teil der sekundären Antenne 14" in die Seitenwand hineingeführt. In diesem Fall würde die Sende- und Empfangseinrichtung vorzugsweise parallel zur Seitenwand des Reifens angeordnet. Bei der Variante C überdeckt die sekundäre Antenne 14'" sowohl einen Bereich der Seitenwand als auch einen Bereich, der parallel zur Lauffläche des Reifens liegt. Bei dieser Variante kann die Sende- und Empfangs-einrichtung entweder parallel zur Seitenwand oder parallel zum Laufstreifen ausgerichtet werden. Ein Vorteil dieser Varianten A, B und C besteht darin, dass die sekundäre Antenne zusammen mit der primären Antenne und dem Transponder als ein Gummiflicken beispielweise auf die Reifeninnenseele geklebt werden kann. Auf diese Weise ist jeder beliebige Reifen mit einem solchen Transpondersystem nachrüstbar.

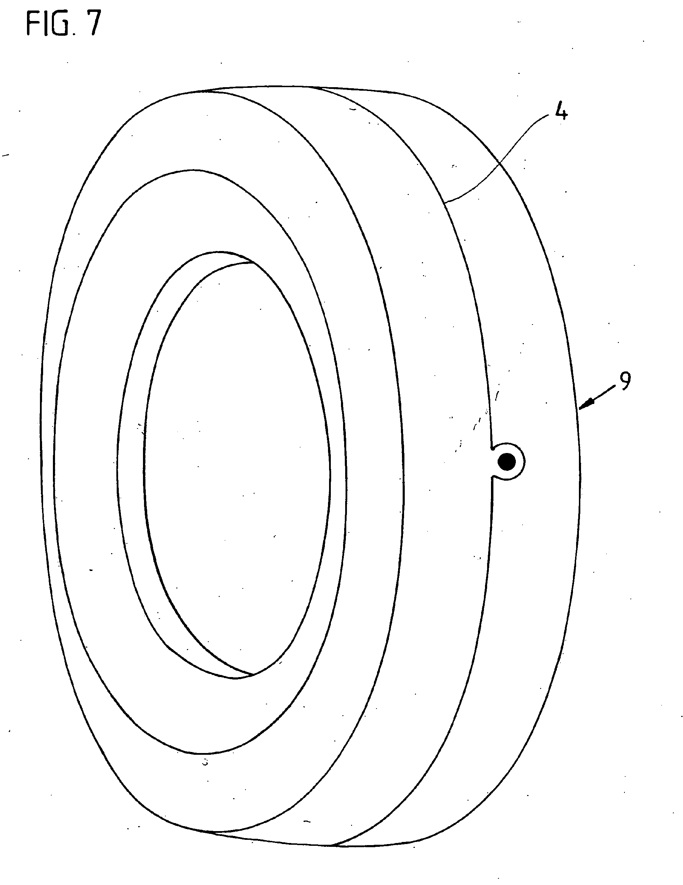

Fig. 7 zeigt ein weiteres Ausführungsbeispiel, bei dem die sekundäre Antenne 4 im Wesentlichen als geschlossener Ring in einer Ebene parallel zur Lauffläche des Reifens angeordnet ist. Bei diesem Ausführungsbeispiel würde die Sende- und Empfangseinheit in einer Ebene parallel zu den Seitenwänden des Reifens 9 ausgerichtet. Ein Vorteil dieser Anordnung der sekundären Antenne 4 besteht darin, dass dadurch das Transpondersystem eine große Übertragungsreichweite in axialer Richtung des Reifens besitzt.

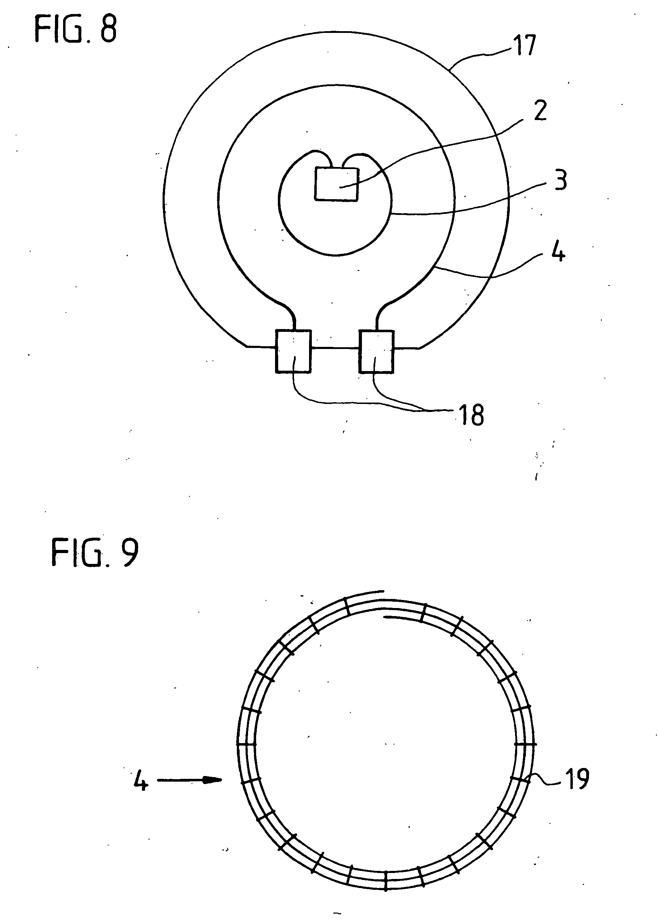

Fig. 8 zeigt ein Gehäuse 17, in dem sowohl der Transponder 2 mit der primären Antenne 3 als auch ein Teil der sekundären Antenne 4 angeordnet sind. Es ist ausschließlich der Koppelbereich der sekundären Antenne 4 im Gehäuse untergebracht, deren Enden in Steckkontakten 18 enden. Der restliche Teil der sekundären Antenne 4 wird über diese Steckkontakte 18 mit dem Koppelbereich der sekundären Antenne 4 verbunden.

Fig. 9 zeigt ein mögliches Ausführungsbeispiel der sekundären Antenne 4. Sie besteht aus einem dünnen Draht, welcher in mehreren Windungen zu einem geschlossenen Ring geformt wird. Mehrere Bänder 19 werden um die sekundäre Antenne 4 gewickelt, um damit einen geschlossenen Kontakt zwischen den Drahtwindungen herzustellen.

### Bezugszeichenliste (ist Teil der Beschreibung)

- 1: Einrichtung zur Überwachung und Identifizierung von Luftreifen
- 2: Transponder
- 3: primäre Antenne
- 4: sekundäre Antenne
- 4', 4": Anfangs- und Endbereiche der sekundären Antenne
- 5: Koppelbereich
- 6: sekundäre Antenne
- 7: Koppelbereich
- 8: Überkreuzungsbereich
- 9: Reifen
- 10 - 10''': bevorzugte Positionen für Leiterschleifen eine sekundären Antenne
- 11: Transponderschlaufe
- 12, 13: Stränge der sekundäre Antenne 4
- 14' - 14": sekundäre Antenne
- 15' - 15": primäre Antenne mit zugehörigen Transponder
- 16: primäre Antenne mit zugehörigen Transponder
- 17: Gehäuse

- A: Variante A, lokale Begrenzung der sekundäre Antenne
- B: Variante B, lokale Begrenzung der sekundäre Antenne
- C: Variante C, lokale Begrenzung der sekundäre Antenne

## Patentansprüche

1. System zur Überwachung und Identifizierung von Luftreifen, wobei der zu überwachende Luftreifen ein oder mehrere elektronische Bauteile zum Senden und /oder Empfangen und Speichern von Informationen und / oder Energie aufweist, wobei außerhalb des zu überwachenden Luftreifens eine in der Nähe desselben angeordnete Sende- und Empfangseinrichtung vorhanden und der Luftreifen relativ zur außerhalb desselben angeordneten Sende- und Empfangseinrichtung bewegbar und /oder drehbar ist,
wobei das elektronische Bauteil eine primäre Antenne (3) aufweist, welche in einem Koppelbereich (5, 7) induktiv mit einer als geschlossenen Leiterschleife ausgebildeten sekundären Antenne (4, 6) gekoppelt ist, wobei die Leiterschleife der sekundären Antenne (4) einen Teilbereich innerhalb und / oder an der Oberfläche des Luftreifens (9) umschließt, **dadurch gekennzeichnet, dass**
die sekundäre Antenne (4, 6) innerhalb des Laufstreifens oder Gürtelbereiches angeordnet und ein Transponder (2) mit der primären Antenne (3) auf der Innenseite des Luftreifens (9) aufgebracht ist.

2. Luftreifen der ein oder mehrere elektronische Bauteile zum Senden und / oder Empfangen und Speichern von Informationen und / oder Energie aufweist,
wobei das elektronische Bauteil eine primäre Antenne (3) aufweist, welche in einem Koppelbereich (5, 7) induktiv mit einer als geschlossenen Leiterschleife ausgebildeten sekundären Antenne (4, 6) gekoppelt ist, wobei die Leiterschleife der sekundären Antenne (4) einen Teilbereich innerhalb und / oder an der Oberfläche des Luftreifens (9) umschließt, **dadurch gekennzeichnet, dass**
die sekundäre Antenne (4, 6) innerhalb des Laufstreifens oder Gürtelbereiches angeordnet und ein Transponder (2) mit der primären Antenne (3) auf der Innenseite des Luftreifens (9) aufgebracht ist.

3. System oder Luftreifen nach Anspruch 1 oder 2, **dadurch gekennzeichnet, dass** die sekundäre Antenne (4) einen Umfangsbereich des Luftreifens (9) in einer Fläche parallel zur begrenzenden Oberfläche des Luftreifens (9) im Wesentlichen umschließt.

4. System oder Luftreifen nach einem der Ansprüche 1 bis 3, **dadurch gekennzeichnet, dass** das elektronische Bauteil als ein mit Sensoren versehener Transponder (2) und die primäre Antenne (3) als eine das elektronische Bauteil im Wesentlichen in seiner Ausbreitungsebene umschließende Leiterschleife ausgebildet sind.

5. System oder Luftreifen nach einem der Ansprüche 1 bis 4, **dadurch gekennzeichnet, dass** ein Teil der Leiterschleife der sekundären Antenne (4, 6) in einem Koppelbereich (5, 7) im Wesentlichen in der Ebene der primären Antenne (3) letztere teilweise, ganz oder mehmals umschließt.

6. System oder Luftreifen nach einem der Ansprüche 1 bis 5, **dadurch gekennzeichnet, dass** die Leiterschleife der sekundären Antenne (4) im Wesentlichen in einer Fläche innerhalb oder parallel zum Laufstreifen den Umfang des Luftreifens (9) umschließt.

7. System oder Luftreifen nach einem der Ansprüche 1 bis 6, **dadurch gekennzeichnet, dass** der Transponder (2) und die primäre Antenne (3) in axialer Richtung des Reifens asymetrisch angeordnet sind.

8. System oder Luftreifen nach einem der Ansprüche 1 bis 7, **dadurch gekennzeichnet, dass** die sekundäre Antenne (4) als geschlossener Ring in einer Fläche parallel zur Reifenoberfläche um den Luftreifen (9) verläuft.

9. System oder Luftreifen nach einem der Ansprüche 1 bis 8, **dadurch gekennzeichnet, dass** der Transponder (2), die primäre Antenne (3) sowie der Koppelbereich der sekundären Antenne (4) in einem Gehäuse (17) angeordnet sind, wobei der Koppelbereich über eine oder mehrere Steckverbindungen (18) mit dem restlichen Teil der sekundäre Antenne (4) verbunden wird.

10. System oder Luftreifen nach einem der Ansprüche 1 bis 9, **dadurch gekennzeichnet, dass** die sekundäre Antenne (4) aus einem Draht besteht, welcher in mehreren Windungen zu einem geschlossenen Ring geformt wird.

11. System oder Luftreifen nach einem der Ansprüche 1 bis 10, **dadurch gekennzeichnet, dass** die Leiterschleife der sekundären Antenne (4) aus mehreren Strängen besteht.

12. System oder Luftreifen nach einem der Ansprüche 1 bis 11, **dadurch gekennzeichnet, dass** die Leiterschleife der sekundären Antenne (4) in Ihrer Ausbreitungsrichtung eine hohe Dehnbarkeit besitzt.

## Claims

1. System for monitoring and identifying pneumatic tyres, the pneumatic tyre which is to be monitored having one or more electronic components for transmitting and/or receiving and storing information and/or energy, a transceiver device being present outside the pneumatic tyre to be monitored and being arranged in the vicinity of said tyre, and the pneumatic tyre being capable of being moved and/or rotated with respect to the transceiver device which is arranged outside it, the electronic component having a primary antenna (3) which is inductively coupled, in a coupling region (5, 7), to a secondary antenna (4, 6) which is embodied as a closed conductor loop, the conductor loop of the secondary antenna (4) surrounding a partial region inside the pneumatic tyre (9) and/or on the surface thereof, **characterized in that** the secondary antenna (4, 6) is arranged inside the tread or belt region, and a transponder (2) with the primary antenna (3) is applied to the inside of the pneumatic tyre (9).

2. Pneumatic tyre which has one or more electronic components for transmitting and/or receiving and storing information and/or energy,
the electronic component having a primary antenna (3) which is inductively coupled, in a coupling region (5, 7), to a secondary antenna (4, 6) which is embodied as a closed conductor loop, the conductor loop of the secondary antenna (4) surrounding a partial region inside the pneumatic tyre (9) and/or on the surface thereof, **characterized in that** the secondary antenna (4, 6) is arranged inside the tread or belt region, and a transponder (2) with the primary antenna (3) is applied to the inside of the pneumatic tyre (9).

3. System or pneumatic tyre according to Claim 1 or 2, **characterized in that** the secondary antenna (4) essentially surrounds a circumferential region of the pneumatic tyre (9) in a face which is parallel to the adjoining surface of the pneumatic tyre (9).

4. System or pneumatic tyre according to one of Claims 1 to 3, **characterized in that** the electronic component is embodied as a transponder (2) which is provided with sensors, and the primary antenna (3) is embodied as a conductor loop which surrounds the electronic component essentially in its propagation plane.

5. System or pneumatic tyre according to one of Claims 1 to 4, **characterized in that** part of the conductor loop of the secondary antenna (4, 6) surrounds the primary antenna (3) partially, entirely or repeatedly, in a coupling region (5, 7) essentially in the plane of the primary antenna (3).

6. System or pneumatic tyre according to one of Claims 1 to 5, **characterized in that** the conductor loop of the secondary antenna (4) surrounds the circumference of the pneumatic tyre (9) essentially in a face inside or parallel to the tread.

7. System or pneumatic tyre according to one of Claims 1 to 6, **characterized in that** the transponder (2) and the primary antenna (3) are arranged asymmetrically in the axial direction of the tyre.

8. System or pneumatic tyre according to one of Claims 1 to 7, **characterized in that** the secondary antenna (4) extends around the pneumatic tyre (9) as a closed ring in a face parallel to the surface of the tyre.

9. System or pneumatic tyre according to one of Claims 1 to 8, **characterized in that** the transponder (2), the primary antenna (3) and the coupling region of the secondary antenna (4) are arranged in a housing (17), the coupling region being connected to the remaining part of the secondary antenna (4) by means of one or more plug-type connections (18).

10. System or pneumatic tyre according to one of Claims 1 to 9, **characterized in that** the secondary antenna (4) is composed of a wire which is shaped into a plurality of turns to form a continuous ring.

11. System or pneumatic tyre according to one of Claims 1 to 10, **characterized in that** the conductor loop of the secondary antenna (4) is composed of a plurality of lengths.

12. System or pneumatic tyre according to one of Claims 1 to 11, **characterized in that** the conductor loop of the secondary antenna (4) is highly extensible in its propagation direction.

## Revendications

1. Système de surveillance et d'identification de pneumatiques, dans lequel le pneumatique à surveiller présente un ou plusieurs composants électroniques pour émettre et/ou recevoir et stocker des informations et/ou de l'énergie, un dispositif émetteur-récepteur étant prévu en dehors du pneumatique à surveiller, à proximité de celui-ci, et le pneumatique pouvant être déplacé et/ou tourné par rapport au dispositif émetteur-récepteur disposé en dehors de celui-ci,
le composant électronique présentant une antenne primaire (3), qui est accouplée dans une région d'accouplement (5, 7) de manière inductive à une antenne secondaire (4, 6) réalisée sous la forme d'une boucle conductrice fermée, la boucle conductrice de l'antenne secondaire (4) entourant une région partielle à l'intérieur et/ou à la surface du pneumatique (9), **caractérisé en ce que** l'antenne secondaire (4, 6) est disposée à l'intérieur de la bande de roulement ou la région de l'armature et un transpondeur (2) avec l'antenne primaire (3) est disposé sur le côté intérieur du pneumatique (9).

2. Pneumatique présentant un ou plusieurs composants électroniques pour émettre et/ou recevoir et stocker des informations et/ou de l'énergie, le composant électronique présentant une antenne primaire (3), qui est accouplée dans une région d'accouplement (5, 7) de manière inductive à une antenne secondaire (4, 6) réalisée sous la forme d'une boucle conductrice fermée, la boucle conductrice de l'antenne secondaire (4) entourant une région partielle à l'intérieur et/ou à la surface du pneumatique (9), **caractérisé en ce que** l'antenne secondaire (4, 6) est disposée à l'intérieur de la bande de roulement ou la région de l'armature et un transpondeur (2) avec l'antenne primaire (3) est disposé sur le côté intérieur du pneumatique (9).

3. Système ou pneumatique selon la revendication 1 ou 2, **caractérisé en ce que** l'antenne secondaire (4) entoure substantiellement une région périphérique du pneumatique (9) dans une surface parallèle à la surface limite du pneumatique (9).

4. Système ou pneumatique selon l'une quelconque des revendications 1 à 3, **caractérisé en ce que** le composant électronique est réalisé sous la forme d'un transpondeur (2) pourvu de capteurs et l'antenne primaire (3) est réalisée sous la forme d'une boucle conductrice entourant le composant électronique substantiellement dans son plan de propagation.

5. Système ou pneumatique selon l'une quelconque des revendications 1 à 4, **caractérisé en ce qu'**une partie de la boucle conductrice de l'antenne secondaire (4, 6) entoure complètement ou plusieurs fois l'antenne primaire (3), dans une région d'accouplement (5, 7) sensiblement dans le plan de l'antenne primaire (3).

6. Système ou pneumatique selon l'une quelconque des revendications 1 à 5, **caractérisé en ce que** la boucle conductrice de l'antenne secondaire (4) entoure sensiblement dans une surface à l'intérieur ou parallèlement à la bande de roulement, la périphérie du pneumatique (9).

7. Système ou pneumatique selon l'une quelconque des revendications 1 à 6, **caractérisé en ce que** le transpondeur (2) et l'antenne primaire (3) sont disposés de manière asymétrique dans la direction axiale du pneumatique.

8. Système ou pneumatique selon l'une quelconque des revendications 1 à 7, **caractérisé en ce que** l'antenne secondaire (4) s'étend autour du pneumatique (9) sous forme de bague fermée dans une surface parallèle à la surface du pneumatique.

9. Système ou pneumatique selon l'une quelconque des revendications 1 à 8, **caractérisé en ce que** le transpondeur (2), l'antenne primaire (3) ainsi que la région d'accouplement de l'antenne secondaire (4) sont disposés dans un boîtier (17), la région d'accouplement étant connectée à la partie restante de l'antenne secondaire (4) par le biais d'un ou de plusieurs connecteurs à fiches (18).

10. Système ou pneumatique selon l'une quelconque des revendications 1 à 9, **caractérisé en ce que** l'antenne secondaire (4) se compose d'un fil métallique qui est formé en plusieurs enroulements pour donner une bague fermée.

11. Système ou pneumatique selon l'une quelconque des revendications 1 à 10, **caractérisé en ce que** la boucle conductrice de l'antenne secondaire (4) se compose de plusieurs torons.

12. Système ou pneumatique selon l'une quelconque des revendications 1 à 11, **caractérisé en ce que** la boucle conductrice de l'antenne secondaire (4) possède dans sa direction de propagation une grande capacité d'extension.
